# EUROPÄISCHE PATENTANMELDUNG

(11) **EP 1 990 170 A2**
(43) Veröffentlichungstag der Anmeldung: **12.11.2008**
(21) Anmeldenummer: 08008750.5
(22) Anmeldetag: 09.05.2008
(51) Int. Cl.: B29C 35/08, B29C 67/20

(54) **Verfahren und Vorrichtung zur Herstellung eines Formteils**

(30) Priorität: 10.05.2007 AT 7222007
(71) Anmelder: Greiner Perfoam GmbH, 4550 Kremsmünster (AT)
(72) Erfinder: Riepl, Roland, Ing., 4400 Steyr (AT)
(74) Vertreter: Secklehner, Günter

(57) **Zusammenfassung**

Die Erfindung betrifft ein Verfahren zur Herstellung eines Formteils (5) aus einem Verbundschaumstoffumfassend Schaumstoffflocken (7) und ein Bindemittel, nach dem die Schaumstoffflocken (7) mit dem Bindemittel benetzt werden und in einem Fluidstrom in eine Form (1) eingetragen werden, die allseitig mit Formwänden versehen ist, wobei zumindest eine der Formwände zumindest eine Entlüftungsöffnung (6) für das Fluid aufweist, und danach das Bindemittel durch Mikrowellen zur Reaktion gebracht wird und die Schaumstoffflocken (7) zum Formteil (5) verbunden werden, wobei der Fluidstrom zumindest während des Füllvorganges der Form (1) aufrecht erhalten wird, um eine bevorzugt Ablagerung der Schaumstoffflocken (7) an einer der Formwände zu vermeiden. Für zumindest eine Formwand wird ein Werkstoff verwendet, der einen dielektrischen Verlustfaktor (tan δ) bei I MHz nach DIN 53 483 aufweist, der ausgewählt ist aus einem Bereich mit einer unteren Grenze von 0,00005 und einer oberen Grenze von 0,0008.

## Beschreibung

Die Erfindung betrifft ein Verfahren zur Herstellung eines Formteils aus einem Verbundschaumstoff, umfassend Schaumstoffflocken und ein Bindemittel, nach dem die Schaumstoffflocken mit dem Bindemittel benetzt werden und in einem Fluidstrom in einen Formhohlraum einer Form eingetragen werden, wobei der Formhohlraum allseitig mit Formwänden versehen ist, wobei zumindest eine der Formwände zumindest eine Entlüftungsöffnung für das Fluid aufweist, und danach das Bindemittel bei erhöhter Temperatur zur Reaktion gebracht wird und dadurch die Schaumstoffflocken zum Formteil verbunden werden, wobei der Fluidstrom zumindest während des Füllvorganges der Form aufrecht erhalten wird um eine bevorzugte Ablagerung der Schaumstoffflocken an einer der Formwände zu vermeiden, sowie eine Vorrichtung zur Herstellung eines Formteils aus einem Verbundschaumstoff, mit einer Form, die einen Formhohlraum aufweist, der allseitig von Formwänden umgeben ist, wobei zumindest eine der Formwände zumindest eine Entlüftungsöffnung für ein Fluid aufweist, und in zumindest einer Formwand eine Öffnung für das Eintragen von Schaumstoffflocken in den Formhohlraum ausgebildet ist, wobei die Öffnung mit einer Rohrleitung verbunden ist, in der die Schaumstoffflocken zur Form einen Fluidstrom förderbar sind, und mit zumindest einer Heizeinrichtung.

Das erfindungsgemäße Verfahren sowie die erfindungsgemäße Vorrichtung sind eine Weiterentwicklung des Verfahrens und der Vorrichtung, welche in der EP 0 657 266 B von der Anmelderin beschrieben sind. In dieser EP 0 657 266 B wird ein Verfahren zur Herstellung eines Formteils aus Flocken aus Kunststoffschaum und gegebenenfalls Füllmaterialien, insbesondere eines Recyclingkunststoffschaums, beschrieben, bei dem Flocken aus Recyclingkunststoff mit einem flüssigen Rohmaterial eines Kunststoffes vermischt und oberflächlich beschichtet werden, worauf sie in eine Form eingebracht und die Reaktion des Rohmaterials zu einer zusammenhängenden Zellstruktur verbunden und, gegebenenfalls nach einem Trocknungsvorgang, aus einem Formhohlraum entnommen werden, wobei die Flocken aus Kunststoffschaum und/oder Füllmaterialien, die mit dem Rohmaterial vermischt sind, unter einem vorbestimmten Druck durch eine Einströmöffnung in einen allseitig verschlossenen und mit Lüftungsöffnungen zum Abströmen des gasförmigen Mediums in zumindest der der Einströmöffnung gegenüberliegenden Formfläche versehenen Formhohlraum eingeblasen und dieser mit den Flocken derart gefüllt wird, dass das durchschnittliche Raumgewicht eines Volumsteils mit vorbestimmten Referenzvolumen in unterschiedlichen Querschnittscheiben des Formteils durch das Eintragen der Flocken mit dem gasförmigen Medium in die Form gleich hoch ist, worauf gegebenenfalls das Volumen des Formhohlraums nach dem Füllen mit den Flocken und/oder Füllmaterialien in Teilbereichen des Formhohlraums verringert wird und wobei danach durch Zufuhr von Druck und/oder Temperatur und/oder einem Wasserdampf die Reaktion des Rohmaterials ausgelöst wird. Die Vorrichtung zur Durchführung des Verfahrens zur Herstellung eines Formteils weist mehrere Aufnahmebehälter für Teile oder Flocken aus Kunststoffschaum und gegebenenfalls Füllmaterialien, eine den Aufnahmebehältern insbesondere nachgeordnete Zerkleinerungsvorrichtung für die Teile bzw. Flocken, welcher ein Wiegebehälter zugeordnet ist, dessen Auslass in eine Mischvorrichtung mündet, in die auch Leitungen von Aufnahmekesseln für das Rohmaterial münden, wobei der Mischvorrichtung ein Zwischenlagerbehälter nachgeordnet ist, der mit einer Wiegevorrichtung versehen ist und der über eine Fördervorrichtung, z.B. ein Fördergebläse oder einen Schneckenförderer, mit einem Einlass bzw. einem Auffangtrichter eines Fördergebläses verbunden ist, welche über eine bedarfsweise kuppelbare Zufuhrleitung mit dem allseitig umschlossenen Formhohlraum verbunden ist, wobei Lüftungsöffnungen zum Abströmen eines gasförmigen Mediums in zumindest der einer Einströmöffnung gegenüberliegenden Formfläche des Formhohlraumes abwechselnd mit der Umgebungsluft, einer Vakuumpumpe oder einer Speiseleitung für ein Reaktionsmittel, z.B. Dampf, insbesondere Trockendampf, mit Temperaturen zwischen 160 °C bis 180 °C, verbindbar sind und die Formflächen des Formhohlraumes gegebenenfalls mehrteilig ausgebildet und/oder gegebenenfalls verstellbarer Formeinsätze darin angeordnet sind, auf. Durch das Eintragen des mit einem Bindemittel versehenen Schaumstoffflockengemisches in einem Gasstrom in die den Formhohlraum wird eine gleichmäßigere Dichte des Formteils über dessen gesamtes Volumen erreicht, im Vergleich zu herkömmlichen Schüttverfahren, bei denen das Schaumstofflockengemisch in die offene Form eingeschüttet wird. Durch das Einblasen wird eine bevorzugte Ablagerung des Schaumstoffflockengemisches an bestimmten Formflächen während des Füllvorganges zumindest weitgehend verhindert, indem ein sich möglicherweise aufbauender Staudruck des Gases über die Lüftungsöffnungen vermieden wird.

Aus der DE 44 15 586 C ist es weiters bekannt, zur Herstellung eines Verbundschaums mit akustischen Eigenschaften Schaumstoffflocken unterschiedlicher Größe, unterschiedlicher Herkunft und/oder unterschiedlicher Materialzusammensetzung mit einer geringen Menge eines Polyurethan-Dispersions-Bindemittels zu benetzen. Das Gemisch wird anschließend zu einem Formteil oder zu kontinuierlichen Bahnen zusammengefügt und unter Einwirkung von heißem Wasserdampf oder von Mikrowellenenergie gehärtet und anschließend getrocknet. Dieser Verbundschaum ist zu Schallisolationszwecken in Fahrzeugen und im allgemeinen Maschinenbau aber auch im Bauwesen verwendbar. Die Schaumstoffflocken werden nach dem Benetzten mittels Unterdruck in einen Dosierbunker gesaugt und von hier mit Überdruck über zwei Injektoren in ein Formbett geblasen.

Es ist die Aufgabe der vorliegenden Erfindung, das Verfahren zur Herstellung eines Formteiles aus einem Verbundschaumstoff nach der EP 0 657 266 B zu vereinfachen.

Diese Aufgabe wird erfindungsgemäß einerseits durch das eingangs genannte Verfahren gelöst, bei dem zur Temperaturerhöhung Mikrowellen von außerhalb der Form in diese eingestrahlt werden und für zumindest eine Formwand der Form ein Werkstoff verwendet wird, der einen dielektrischen Verlustfaktor bei 1 MHz nach DIN 53 483 aufweist, der ausgewählt ist aus einem Bereich mit einer unteren Grenze von 0,00005 und einer oberen Grenze von 0,0008, sowie andererseits durch die eingangs genannte Vorrichtung, bei der die Heizeinrichtung eine Mikrowellenheizung ist, die in der Nähe von oder an einer äußeren Oberfläche einer Formwand angeordnet ist und zumindest diese Formwand der Form aus einem Werkstoff besteht, der einen dielektrischen Verlustfaktor bei 1 MHz nach DIN 53 483 aufweist, der ausgewählt ist aus einem Bereich mit einer unteren Grenze von 0,00005 und einer oberen Grenze von 0,0008 (bei Raumtemperatur).

Es ist dabei von Vorteil, dass für die Heizung der Form kein Dampf verwendet wird, wodurch sich der apparative Aufwand der Vorrichtung durch die nicht benötigten Leitungen zur Dampfführung vereinfachen lässt. Es wird weiters damit der Vorteil erreicht, dass insbesondere im Fall von Polyurethanschäumen die Formteile die Schäumform ohne einen Trockungsvorgang in der Form bereits in einem sehr trockenen Zustand verlassen, da kein bzw. im Fall von Polyurethanschäumen nur mehr jene Menge an Wasser gegebenenfalls zugesetzt werden muss - sofern die Luftfeuchtigkeit nicht ausreichend ist, welche für die Reaktion des Polyols mit dem Isocyanat zur Erzeugung des Kohlendioxid erforderlich ist. Es können damit die Taktzeiten verkürzt werden, wodurch die Produktivität der Vorrichtung gesteigert werden kann. Dadurch, dass die Bestrahlung des Gemisches aus Schaumstoffflocken mit dem Bindemittel zur Reaktion des Bindemittels von außerhalb der Form erfolgt, sind keine komplexen Durchführungen durch die Formwände für die Einspeisung der Mikrowellenenergie erforderlich. Es wird damit der Vorteil erreicht, dass insbesondere für den Fall, dass ein Formkarussell verwendet wird, auf dem mehrere Formen angeordnet sind, diese Formen problemlos vor bzw. über der Mikrowellenheizeinrichtung positioniert werden können, wobei die Genauigkeit der Positionierung in gewissen Grenzen schwanken kann. Von Vorteil ist weiters, dass eine Form mit Formwänden mit Lüftungsöffnungen für das Fluid verwendet wird, da diese normalerweise nach außen offen sind und somit die Mikrowellen auch ungestört in diese Lüftungsöffnungen in den Formhohlraum eingestrahlt werden können, wodurch der Eintrag der Mikrowellenenergie erhöht werden kann bzw. die notwendige Leistung für die Heizeinrichtung gesenkt werden kann.

Es ist im Rahmen der Erfindung einerseits möglich, dass die Schaumstoffflocken vor dem Einblasen in den Formhohlraum mit dem Bindemittel versetzt werden, ebenso ist es möglich, dass die Schaumstoffflocken in der Form selbst mit dem Bindemittel vermengt werden, wozu bevorzugt Sprühdüsen verwendet werden, die insbesondere in zumindest einer der Formwände angeordnet sind. Durch letztere Variante wird das Verfahren insofern vereinfacht, als nicht auf bestimmte Reaktionszeiten des Bindemittels für den Füllvorgang Rücksicht genommen werden muss bzw. wird damit der Vorteil erreicht, dass bei Störfällen in der Zufuhrleitung für die Schaumstoffflocken kein Bindemittel vorhanden ist und somit durch Aushärten des Bindemittels dieser Zufuhrleitung nicht verstopft wird.

Zur Erhöhung der gleichmäßigen Verteilung des Bindemittels in den Schaumstoffflocken bzw. zur besseren Benetzung der Schaumstoffflocken mit dem Bindemittel ist es von Vorteil, wenn die Form in zumindest zwei Füllstufen mit Teilmengen gefüllt wird, wobei zwischen den Füllstufen das Bindemittel in die Form eingebracht wird. Indem die Form nur teilweise gefüllt ist, wird eine Durchwirbelung der Schaumstoffflocken ermöglicht, sodass also die Schaumstoffflocken zumindest annähernd gleichmäßig mit dem Bindemittel versehen werden können. Aufgrund der Durchwirbelung in der Form können sich die in weiterer Folge zusätzlich eingebrachten Schaumstoffflocken zwischen die bereits benetzten Schaumstoffflocken positionieren, sodass eine weitere Benetzung unter Umständen nicht mehr erforderlich ist, sofern im ersten Benetzungsschritt bereits eine ausreichende Menge an Bindemittel eingebracht wurde.

Als Bindemittel wird bevorzugt ein Gemisch für einen Polyurethanschaum verwendet. Dieses kann sowohl als so genannter Einkomponenten- als auch als Zweikomponentenschaum verwendet werden. Die Verwendung eines Polyurethanschaumes als Bindemittel hat den Vorteil, dass dieser eine hohe Adhäsionswirkung aufweist und somit eine entsprechende Festigkeit bzw. ein entsprechender Zusammenhalt der Schaumstoffflocken im fertigen Formteil erreicht wird und zum anderen kann dieser in unterschiedlichsten Härtegraden hergestellt werden, sodass also von Weichschäumen bis Hartschäumen eine sehr große Bandbreite der Eigenschaften des Formteils hergestellt werden kann.

Die Schaumstoffflocken können mit einem Überdruck in die Form eingeblasen werden, der ausgewählt ist aus einem Bereich mit einer unteren Grenze von 1,5 bar und einer oberen Grenze von 10 bar. Es wird damit eine ausreichend hohe Füllgeschwindigkeit der Form erreicht, wobei gleichzeitig eine zu starke Kompression der Schaumstoffflocken und gegebenenfalls eine Agglomeratbildung vermieden werden kann.

Insbesondere können die Schaumstoffflocken mit einem Überdruck in die Form eingeblasen werden, der ausgewählt ist aus einem Bereich mit einer unteren Grenze von 1,5 bar und einer oberen Grenze von 5 bar, beispielsweise ausgewählt aus einem Bereich mit einer unteren Grenze von 2 bar und einer oberen Grenze von 4 bar.

Als Werkstoff für die Formwand bzw. die Formwände werden bevorzugt Kunststoffe, ausgewählt aus einer Gruppe umfassend Polyethylen, ultrahochmolekulares Polyethylen oder Polypropylen verwendet, wobei auch Mischformen möglich sind. Diese Kunststoffe weisen eine hohe Durchlässigkeit für Mikrowellenstrahlung auf, wodurch eine Überhitzung der Form vermieden werden kann.

Zur weiteren Minimierung von Dichtevarianten im Formteil zumindest im Zeitpunkt des Füllvorganges der Form ist es von Vorteil, wenn in sämtlichen Formwänden die Lüftungsöffnungen ausgebildet sind.

Dabei ist es von Vorteil, wenn die Lüftungsöffnungen eine lichte Weite aufweisen, die ausgewählt ist aus einem Bereich mit einer unteren Grenze von 0,5 mm und einer oberen Grenze von 25 mm. Insbesondere können diese Lüftungsöffnungen eine lichte Weite aufweisen, die ausgewählt ist aus einem Bereich mit einem unteren Grenzwert von 2,5 mm und einer oberen Grenze von 20 mm, beispielsweise aus einem Bereich mit einer unteren Grenze von 5 mm und einer oberen Grenze von 15 mm.

Die Lüftungsöffnungen in den Formwänden können eine unterschiedliche lichte Weite aufweisen, wodurch das Strömungsverhalten des Fluides im Formhohlraum und damit die Vereinheitlichung der Dichte weiter verbessert werden kann.

In einer besonderen Ausführungsvariante hierzu weisen die Lüftungsöffnungen in jener Formwand, welche der Öffnung für den Eintrag der Schaumstoffflocken gegenüberliegt im Vergleich zu den Lüftungsöffnungen der anderen Formwände eine kleinere lichte Weite auf, wodurch erreicht wird, dass zumindest ein Teilstrom des Förderfluids an diese Wand umgelenkt wird und damit eine Durchwirbelung im Formhohlraum und eine Vergleichmäßigung der Dichte des fertigen Formteils erreicht werden kann.

Ebenfalls zur Verbesserung des Strömungsverhaltens bzw. zur Vereinheitlichung der Dichte des Formteils zumindest während des Füllvorganges können die Lüftungsöffnungen in einem Abstand zueinander angeordnet sein, der ausgewählt ist aus einem Bereich mit einer unteren Grenze von 10 mm und einer oberen Grenze von 100 mm. Insbesondere kann dieser Abstand ausgewählt sein aus einem Bereich mit einer unteren Grenze von 15 mm und einer oberen Grenze von 75 mm, bevorzugt ausgewählt aus einem Bereich mit einer unteren Grenze von 25 mm und einer oberen Grenze von 50 mm.

Es sei an dieser Stelle angemerkt, dass mit dem Ausdruck "zumindest während des Füllvorganges" gemeint ist, dass es im Rahmen der Erfindung selbstverständlich möglich ist, den Formteil zumindest bereichsweise während der Reaktion des Bindemittels oder nach dem Füllen der Form zu verdichten, um Bereiche bewusst mit einer höheren Dichte herzustellen, beispielsweise um Befestigungsmöglichkeiten an dem Formteil, welche eine höhere Ausreißfestigkeit aufweisen, zu ermöglichen, wobei auch in diesem Falle es von Vorteil ist, die Dichte im Formteil während des Füllvorganges möglichst mit gleichmäßiger Dichte einzustellen, da dann die durch das Verdichten erzielte Dichteerhöhung genau vorher bestimmt werden kann, anders als diese bei Herstellungsverfahren der Fall ist, welche mit Befüllung der offenen Form durch Schütten arbeiten, bei denen die Dichteverteilung in der Form von vielen Faktoren abhängig ist.

Die Form kann in einer Halteeinrichtung angeordnet werden, wodurch dieser über diese Halteeinrichtung die notwendige Stabilität gegeben werden kann und damit in der Folge die Formwände der Form dünner und somit auch durchlässiger für die Mikrowellenenergie ausgeführt werden können.

Es ist schließlich auch möglich, dass in mehreren Formwänden Öffnungen für das Eintragen der Schaumstoffflocken angeordnet sind, um damit einerseits die Füllzeit zu verkürzen und andererseits wiederum eine Vergleichmäßigung der Dichte zumindest während des Füllvorganges zu erreichen.

Zum besseren Verständnis der Erfindung wird diese anhand der nachfolgenden Figuren näher erläutert.

Es zeigen jeweils in stark vereinfachter schematischer Darstellung:
- Fig. 1: eine erste Ausführungsvariante einer erfindungsgemäßen Schäumform in Seitenansicht geschnitten;
- Fig. 2: eine Draufsicht auf eine Form mit einer möglichen Variante der Anordnung der Entlüftungsöffnungen;
- Fig. 3: eine Form in Schrägansicht mit einer Halteeinrichtung;
- Fig. 4: eine Form mit einer alternativen Ausbildung der Entlüftungsöffnungen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

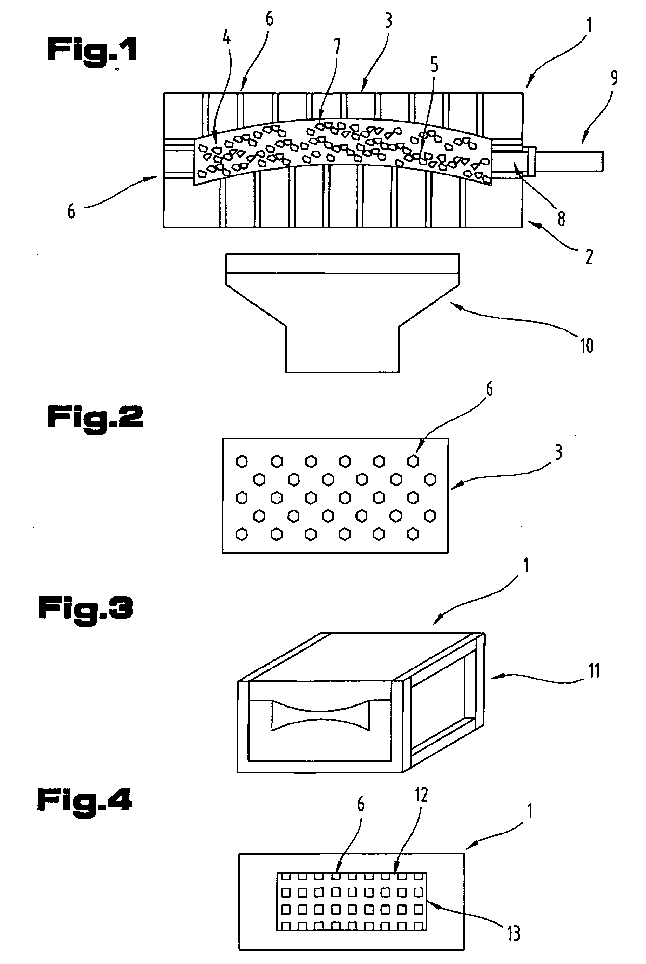

In Fig. 1 ist eine Form 1 in Seitenansicht geschnitten dargestellt, bestehend aus einer unteren Teilform 2 und einem oberen Teilform 3. Diese beiden Teilformen 2, 3 umgeben einen Formhohlraum 4. Der Formhohlraum 4 kann eine dem jeweiligen, herzustellenden Formteil 5 entsprechende Kontur aufweisen, wobei diese beliebig festlegbar ist, je nachdem welche Formteile 5 hergestellt werden. Beispielsweise können diese Formteile 5 Fahrzeugteile für Kraftfahrzeuge sein, z.B. Seitenabdeckungen für Schallisolationszwecke, Kopfstützen, Hutablagen, Kofferraumauskleidungen, etc. Ebenso können diese Formteile 5 für andere Verwendungszwecke hergestellt werden, insbesondere für Wärme- und Schallisolationsverwendungen, beispielsweise in elektrischen Geräten, für das Bauwesen, etc.

Obwohl die Form 1 bei diesem Ausführungsbeispiel lediglich aus zwei Formwänden, nämlich der oberen und der unteren Teilform 2, 3 bestehen, ist es selbstverständlich möglich, dass mehr als zwei Formwände ausgebildet sind, insbesondere eine Bodenwand, vier Seitenwände und eine Deckwand. Darüber hinaus besteht die Möglichkeit, mehr als sechs Formwände auszubilden, wenn der Formteil 5 beispielsweise von der rechteckigen Geometrie abweicht. Zusätzlich besteht die Möglichkeit zumindest einzelne der Formwände mehrteilig auszubilden. Jedenfalls bilden aber diese Formwände immer einen allseitig umschlossenen - im Sinne der Erfindung - Formhohlraum 4 aus. Zum Entformen des fertigen Formteils 5 ist zumindest eine der Formwände abnehmbar ausgebildet, also beispielsweise die obere Teilform 2 bei vorliegender Ausführungsvariante. Zum Aufstoßen des fertigen Formteils 5 ist es weiters möglich, dass in dieser Form 1 entsprechende Ausstoßorgane vorhanden sind, beispielsweise eine durch die untere Teilform 3 hindurchgeführte, vertikal verschiebbare Ausstoßeinrichtung, die sich über zumindest einen Teil der Bodenfläche beispielsweise plattenartig - in Abhängigkeit von der Oberflächenkontur des Bodens - erstreckt.

Bei dieser Ausführungsvariante der Form 1 ist in sämtlichen Formwänden, d.h. in der oberen Teilform 2 und in der unteren Teilform 3 - der eine Art Wanne ausbildet - Entlüftungsöffnungen 6 angeordnet. Diese Entlüftungsöffnungen 6 sind jeweils durch die Formwände durchgängig ausgebildet, um das Entweichen eines Fluides, mit dem Schaumstoffflocken 7 in den Formhohlraum 4 eingeblasen werden, zu ermöglichen.

Im Rahmen der Erfindung ist es aber auch unmöglich, dass lediglich eine Entlünungsöffnung 6 - in Abhängigkeit von der Größe der Form 1 und des herzustellenden Formteils 5, in einer Formwand ausgebildet ist bzw. besteht die Möglichkeit, in dieser Formwand mehrere Entlüftungsöffnungen 6 vorzusehen, bzw. besteht weiters die Möglichkeit, dass nicht in sämtlichen sondern nur in mehreren der Formwände Entlüftungsöffnungen 6 bzw. zumindest eine Entlüftungsöffnung 6 ausgebildet ist, z.B. in zwei, drei, vier oder fünf Formwänden.

Die Entlüftungsöffnungen 6 können beispielsweise in Art eines Lochbleches angeordnet sein.

Zur Förderung der Schaumstoffflocken 7 wird bevorzugt ein gasförmiges Fluid, z.B. Luft, verwendet, und weist für das Einblasen der Schaumstoffflocken 7 die Form 1 eine Öffnung 8 in einer der Formwände - bei dieser Ausführungsvariante in der unteren Teilform 3 - auf, welche mit einer Rohrleitung 9 verbindbar ist, durch welche die Schaumstoffflocken 7 in die Form 1, d.h. den Formhohlraum 4, eingetragen werden. Diese Rohrleitung 9 kann dabei unterschiedliche Querschnitte aufweisen, also beispielsweise rund, rechteckig, viereckig, oval oder dgl., und fix mit der Form 1 verbunden sein bzw. ist es möglich, wenn die Form 1 auf einem so genannten Formenkarussell angeordnet ist, auf dem mehrerer dieser Formen 1 vorhanden sind und die taktweise, wie dies aus dem Stand der Technik bereits bekannt ist, mit Schaumstoffflocken 7 befüllt werden, die Rohrleitung 9 mit geeigneten Einrichtungen in Wirkverbindung mit der Form 1 zu verbringen.

Bei der Ausführungsvariante nach Fig. 1 werden die Schaumstoffflocken 7 bereits vor dem Eintragen in den Formhohlraum 4 mit einem Bindemittel benetzt. Es besteht aber andererseits die Möglichkeit, dass in zumindest einer Formwand, beispielsweise der oberen Teilform 2, Eintragvorrichtungen für das, insbesondere flüssige, Bindemittel, also beispielsweise Sprühdüsen oder dgl., angeordnet oder ausgebildet sind, um die Schaumstoffflocken 7 nach dem Einblasen in den Formhohlraum 4 mit dem Bindemittel zu versetzen, insbesondere zu besprühen. Eintragvorrichtung, also beispielsweise die Sprühdüsen, können auch eine Mischeinrichtung aufweisen, sodass mehrkomponentige Rohstoffe für Bindemittel verarbeitet und dem Mischungsverhältnis entsprechend zugesetzt werden können.

Bei Versetzung der Schaumstoffflocken 7 außerhalb der Form 1 mit dem Bindemittel können übliche, dem Stand der Technik entsprechende Mischvorrichtungen verwendet werden, beispielsweise Freifallmischer, Mischvorrichtungen mit Sprühdüsen, etc.

Bei der Ausführungsvariante der Form 1 nach Fig. 1 ist an der Unterseite diese Form 1, d.h. der unteren Teilform 2 benachbart, eine Heizeinrichtung 10 angeordnet, die erfindungsgemäß zur Abgabe von Mikrowellenstrahlung ausgebildet ist. Über diese Heizeinrichtung 10 wird die erforderliche Wärme in den Formhohlraum 1 eingeleitet bzw. in diesem erzeugt, um das Bindemittel zur Reaktion zu bringen und somit das Bindemittel aufzuschäumen bzw. auszuhärten und damit die Schaumstoffflocken 7 miteinander zu dem Verbundschaumstoff zu verbinden.

Ein Verbundschaumstoff im Sinne der Erfindung ist ein Schaumstoff, der aus Schaumstoff flocken besteht, die über besagtes Bindemittel miteinander verbunden sind. Die Schaumstoffflocken können einheitlicher Natur oder aber auch unterschiedlicher Natur sein, beispielsweise aus Polyurethanschaumstoffflocken, Polystyrolschaumstoffflocken, Schaumstoffflocken aus Polyolefinschäumen, wie Polyethylen oder Polypropylen, etc. bestehen. Des Weiteren sind für diese Schaumstoffflocken 7 Recyclingmaterialien einsetzbar, welche beispielsweise aus der Verwertung von Automobilen anfallen, bzw. können diese Schaumstoffflocken 7 aus Abfallmaterialien aus der Produktion von Schaumstoffteilen, beispielsweise dem Abfall, der durch Ausstanzen von Schaumstoffteilen entsteht, hergestellt werden.

Die Herstellung der Schaumstoffflocken 7 erfolgt durch Malen bzw. Reißen in entsprechenden Mühlen bzw. Zerkleinerungseinrichtungen, wie sie für diese aus dem Stand der Technik bekannt sind. Die Schaumstoffflocken 7 können eine unterschiedliche Größe aufweisen, beispielsweise einen mittleren Durchmesser ausgewählt aus einem Bereich mit einer unteren Grenze von 2 mm und einer oberen Grenze von 25 mm.

Unter mittlerem Durchmesser wird dabei jene Abmessung verstanden, der aus den jeweils größten Abmessungen der Durchmesser mehrerer einzelner Schaumstoffflocken 7, beispielsweise 10 oder 20, als Mittelwert erhalten wird.

Ebenso ist es möglich, Schaumstoffflocken 7 innerhalb eines engen Durchmesserbereiches zu verwenden, indem die zerkleinerten Schaurnstoffteile entsprechend ihrer Größe fraktioniert werden. Üblicherweise weisen die Schaumstoffflocken 7 einen unregelmäßigen Habitus auf, der sich nach der Art ihrer Herstellung, also der Zerkleinerung, richtet.

Die Schaumstoffflocken 7 können sowohl offenzellig als auch mit geschlossenen Poren ausgebildet sein.

Des weiteren besteht die Möglichkeit, dass diese Schaumstoffflocken 7 mit weiteren Materialien bzw. Werkstoffen oberflächlich versehen sind, beispielsweise mit Textilien oder Kunststoffschichten, sodass also auch Verbundmaterialien, wie sie beispielsweise im Automobilbau verwendet werden, also beispielsweise mit Teppichen oder Textilien kaschierte Schaumstoffformteil, verwendet werden können.

Als Bindemittel wird bevorzugt ein Rohstoff für einen Polyurethanschaum verwendet, also beispielsweise ein Gemisch aus einem Polyol und einem Isocyanat. Als Polyol kann beispielsweise ein Polyether- oder eine Polyesterpolyol verwendet werden, wie diese z.B. unter der Bezeichnung Lupranol^{®} oder Lupraphen^{®} von der Fa. BASF erhältlich sind. Die Polyesterpolyole können aliphatischer oder aromatischer Natur sein.

Als Isocyanat kann beispielsweise ein Toluoldiisocyanat (TDI) oder ein Methylenphenylisocyanat (MDI) oder ein Methylendicyclohexylisocyanat (HMDI) oder ein Hexamethylendiisocyanat (HDI) eingesetzt werden. Entsprechende Produkte sind z.B. unter der Bezeichnung Lupranate^{®} von BASF erhältlich.

Die beiden Komponenten Polyol und Isocyanat können z.B. in einem Verhältnis ausgewählt aus einem Bereich mit einer unteren Grenze von 1:1 und einer oberen Grenze von 2:1 miteinander vermischt werden.

Der Rohstoff kann sowohl einkomponentig als auch zweikomponentig verwendet werden und es sind derartige Rohstoffe für Schaumstoffe aus dem Stand der Technik bereits bekannt.

Die Heizeinrichtung 10 kann einerseits in der Nähe der jeweiligen Formwand, also beispielsweise der unteren Teilform 2, angeordneten sein oder aber auch direkt an dieser anliegend bzw. mit dieser verbunden sein. Insbesondere der erstere Variante bietet den Vorteil, dass damit Formenkarusselle verwendet werden können und somit eine entsprechende Taktung der Herstellung der Formteile 2 mit mehreren Formen 1 möglich ist, indem das Karussell, d.h. die verschiedenen Formen 1, in bestimmten Taktzeiten über der Heizeinrichtung 10 positioniert werden.

Die Heizeinrichtung 10 muss nicht notwendiger Weise, wie in Fig. 1 dargestellt, an der Unterseite der Form 1 angeordnet sein, es besteht ebenso die Möglichkeit, diese Heizeinrichturig 10 an Seitenwänden oder im Bereich der Deckwand anzuordnen. Des Weiteren besteht im Rahmen der Erfindung die Möglichkeit, mehrere dieser Heizeinrichtungen 10 verteilt über die äußere Oberfläche der Form 1 anzuordnen.

Die Wirkungsweise der Mikrowellenstrahlung für Heizzwecke ist aus der einschlägigen Literatur bereits hinlänglich bekannt. Sie beruht insbesondere darauf, dass damit so genannte Dipolschwingungen angeregt werden und durch diese Dipolschwingungen bzw. Multipolschwingungen aufgrund der Verlustleistung entsprechende Wärme entsteht.

Die Einstrahlung der Mikrowellenenergie in den Formhohlraum 4 kann beispielsweise über die Entlüftungsöffnungen 6 erfolgen. Bevorzugt ist jedoch zumindest jene Formwand an der die Heizeinrichtung 10 angeordnet ist, aus einem Werkstoff gebildet, der im hohen Maße für Mikrowellenenergie durchlässig ist. Beispielsweise kann diese zumindest eine Formwand aus Polyethylen, Ultrahochmolekularem Polyethylen oder Polypropylen bestehen. Bevorzugt wird die gesamte Form 1 aus diesem Werkstoff gebildet bzw. sind auch Kombinationen unterschiedlicher Werkstoffe möglich. Insbesondere umfasst die Form 1 keine Metallteile, sondern besteht beispielsweise ausschließlich aus Kunststoff, insbesondere Polypropylen.

Die Schaumstoffflocken 7 können auch aus einem Polyurethanschaum gebildet sein. Die Form 1 kann Teil einer Gesamtvorrichtung zur Herstellung von Schaumstoffforrnteilen sein, wie diese in der EP 0 657 266 A geoffenbart ist, die somit diesbezüglich Teil dieser Beschreibung ist. Eine derartige Gesamtanlage kann einen Aufnahmebehälter für Schaumstoffabfälle aufweisen, der wiederum eine Zerkleinerungsvorrichtung zur Zerkleinerung dieser Schaumstoffabfälle auf die Schaumstoffflocken 7 umfassen kann. Des Weiteren kann zwischen diesem Aufnahmebehälter und der Form 1 zumindest ein Wiegebehälter angeordnet sein, um entsprechende Mengen, die sich nach dem Volumen des Formhohlraumes 4 sowie der gewünschten Dichte des Formteils 2 richtet, dem Aufnahmebehälter zu entnehmen. Des Weiteren kann eine Mischvorrichtung innerhalb dieser Gesamtanlage angeordnet sein, um die entnommenen Schaumstoffflocken 7 mit dem Bindemittel zu vermischen.

Es können auch mehrere Aufnahmebehälter vorhanden sein, beispielsweise um unterschiedlichste Schaumstoffflocken 7 zu verarbeiten bzw. um unterschiedliche Fraktionen von Durchmessern von Schaumstoffflocken 7 bereitzustellen und miteinander zu vermischen um einen möglichst hohen Füllgrad des Formhohlraums 4 zu erreichen. Aus dieser Mischvorrichtung kann die Mischung, umfassend mit dem Bindemittel benetzte Schaumstoffflocken 7, gegebenenfalls einem Zwischenlagerbehälter zugeführt werden. Aus diesem Zwischenlagerbehälter kann eine entsprechende Menge bzw. ein entsprechendes Volumen, gegebenenfalls über eine Wiegevorrichtung oder eine Zellradschleuse einer Fördervorrichtung zugeführt werden, über die dieses Gemisch in der Folge dem Formhohlraum 4 zugeführt wird, d.h. mit einem Fluid, insbesondere einem Gas, in den Formhohlraum 4 eingeblasen wird. Details dazu sind insbesondere der EP 0 657 266 A zu entnehmen.

Als Formteil 2 im Sinne der Erfindung werden Formteile verstanden, die zumindest annähernd einbaufertig, d.h. mit ihrer endgültigen Form, den Formhohlraum 4 verlassen. Es werden also keine Formteile 2 darunter verstanden, die in Form eines Blockschaumes oder dgl. hergestellt und aus denen in der Folge die fertigen Formteile 2 im Sinne der Erfindung erst durch Schneiden und gegebenenfalls Pressen und Warmumformung hergestellt werden müssen.

Gegebenenfalls können die Entlüftungsöffnungen 6 der Form 1 nach Fig. 1 auch mit einer Saugeinrichtung, z.B. einer Vakuumpumpe, in Wirkverbindung stehen, um einerseits das Eintragen der gegebenenfalls mit dem Bindemittel bereits versetzten Schaumstoffflocken 7 in den Formhohlraum 4 zu unterstützen bzw. den Füllvorgang zu beschleunigen oder aber auch das Abströmen des gasförmigen Fluids aus dem Formhohlraum 4 zu unterstützen.

Es besteht weiters die Möglichkeit, dass in den Formwänden vertikal verschiebbare Stempel angeordnet sind, um beispielsweise bestimmte Bereiche des Formteils 2 zu verdichten. Gegebenenfalls kann eine gesamte Formwand entsprechend verstellbar - vertikal oder horizontal, je nachdem welche Formwand entsprechend ausgebildet ist - sein. Auch diese Ausführungen wurden bereits in der EP 0 657 226 B beschrieben.

Obwohl nicht zwingend erforderlich, besteht im Rahmen der Erfindung die Möglichkeit, den Formteil 5 über einen längeren Zeitraum in der Form 1 zu belassen, um diesen vor der Entformung noch zumindest teilweise zu trocknen.

Fig. 2 zeigt eine mögliche Ausführung der Anordnung der Entlüftungsöffnungen 6 in einer Formwand. Dazu ist in Fig. 2 die obere Teilform 3 dargestellt. Die Eritlüftungsöffnungen 6 weisen bei dieser Ausführung einen sechseckigen Querschnitt auf. Sie können aber auch mit anderen Querschnitten, in Abstimmung auf den Formhohlraum 4 und beispielsweise die Größe der Schaumstoffflocken 7 bzw. die Geometrie des Formhohlraumes 4, versehen sein, beispielsweise mit runden, ovalen, rechteckförmigen, polygonalen, quadratischen Querschnitten. Es sind auch Mischungen mehrer unterschiedlicher Querschnitte möglich.

Bei der Ausführungsvariante nach Fig. 2 sind die Lüftungsöffnungen 6 in horizontaler Richtung linear ausgebildet, wobei jede zweite Reihe an Lüftungsöffnungen 6 gegenüber der vorhergehenden bzw. nachher kommenden Reihe versetzt ist, sodass ein rautenförmiges bzw. hexagonales Muster mit zentrischer Lüftungsöffnung 6 entsteht.

Auch hier können wiederum andere Anordnungen der Lüftungsöffnung 6 in Abhängigkeit von dem Formhohlraum 4, d.h. dessen Geometrie und Größe bzw. auch in Abhängigkeit von der Größe der Schaumstoffflocken 7, gewählt werden, beispielsweise ein quadratische oder rechteckige Anordnung.

Um die Durchlässigkeit für Mikrowellenstrahlung zu erhöhen bzw. die Verlustleistung auf grund der Durchstrahlung durch die Formwand zu verringern, ist es möglich, wie dies Fig. 3 zeigt, die Form 1, d.h. die Formwände, dünnwandig auszubilden, wobei die Form 1 dann vorzugsweise eine Halteeinrichtung 11 umfasst, die der Form 1 die erforderliche mechanische Stabilität gibt. Diese Halteinrichtung 11 kann z.B. rahmenartig oder aber auch gitterartig, etc., ausgebildet sein und besteht wiederum bevorzugt aus einem Kunststoff.

Fig. 4 zeigt eine Ausführungsvariante der Form 1 in Draufsicht, bei welcher die zumindest eine der Seitenwände, d.h. der Formwände, eine große Ausnehmung 12 aufweist. In dieser Ausnehmung 12 ist ein Einsatz 13 gehaltert, wobei dieser Einsatz 13 die Entlüftungsöffnung 6 aufweist, die bei dieser Ausführungsvariante mit quadratischem Querschnitt gebildet sind. Diese Ausführungsvariante der Form 1 hat den Vorteil, dass die Einsätze 13 austauschbar sind, sodass also die Form 1 mit unterschiedlichst ausgebildeten Entlüftungsöffnungen 6 über unterschiedliche Einsätze 13 versehen werden kann bzw. kann die Form 1 auch völlig verschlossen werden, sodass die Form 1 auch für andere Zwecke verwendet werden kann. Es besteht damit also die Möglichkeit, diese Form 1 variabel zu gestalten, also beispielsweise innerhalb einer Form 1 unterschiedliche Querschnitte und Größen von Entlüftungsöffnungen 6 vorzusehen und dementsprechende Einsätze 13 auch gleichzeitig zu verwenden. Die Einsätze 13 können geteilt ausgeführt sein, sodass innerhalb einer Formwand mehrere Einsätze 13 zum Einsatz kommen können und damit auch innerhalb einer Formwand Größe und Geometrie sowie Abstand der Entlüftungsöffnungen 6 variiert werden kann.

Im Hinblick auf mögliche Ausführungen betreffend die Abstände der Entlüftungsöffnungen 6 sowie deren Durchmesser bzw. lichten Weite sei an dieser Stelle auf obige Ausführungen verwiesen.

Für die Herstellung des Formteils 2 wird nun ein Gemisch an Schaumstoffflocken 7 und einem Bindemittel, also beispielsweise Polyurethanschaumstoffflocken, gegebenenfalls mit unterschiedlicher Größe, und einem Rohstoff zur Herstellung eines Polyurethanschaums, also beispielsweise ein Gemisch aus einem Polyol und einem Isocyanat in den Formhohlraum 4 mittels Luft eingeblasen, wobei diese Luft gegebenenfalls vorgewärmt sein kann, um die Taktzeit bzw. die Reaktionszeit des Bindemittels zu verkürzen. Es kann dazu Abwärme aus der Produktion verwendet werden. Die Füllung des Formhohlraums 4 kann in einem erfolgen oder, wie dies bereits oben ausgeführt wurde, kann der Formhohlraum 4 in Teilschritten auch mit Teilmengen gefüllt werden. Des Weiteren ist eine Überfüllung des Formhohlraums 4 möglich, wodurch bereits eine höhere Dichte des fertigen Formteils 2 und damit auch eine höhere mechanische Stabilität erreicht werden kann. Nach der Füllung des Formhohlraums 4 wird dieses Gemisch gegebenenfalls zumindest bereichsweise verdichtet, wobei auch das gesamte Volumen das Formhohlraumes 4 durch entsprechende Verstellung zumindest einzelner der Formwände verringert werden kann, um die Gesamtdichte des fertigen Formteils 2 zu erhöhen.

Im Falle von Polyurethanschäumen kann diesem Gemisch gegebenenfalls Wasser zugesetzt sein, welches für die Polyaddition des Polyols mit dem Isocyanat benötigt wird. Sofern bereits ausreichend Feuchtigkeit in den eingesetzten Schaumstoffflocken 7 vorhanden ist, beispielsweise indem die Schaumstoffflocken 7 Feuchtigkeit aus der Luft während der Lagerung aufnehmen, erübrigt sich eine zusätzliche Wasserzugabe.

Der Anteil des Bindemittels kann ausgewählt sein aus einem Bereich mit einer unteren Grenze von 2 Gew.-% und einer oberen Grenze von 20 Gew.-%, insbesondere einer unteren Grenze von 5 Gew.-% und einer oberen Grenze von 10 Gew.-%, bezogen auf das Gesamtgemisch.

Im Falle von Polyurethanschäumen wird die Multipolschwingung bzw. Dipolschwingung in den Wassermolekülen erzeugt, die in der Folge die notwendige Wärme bzw. Hitze zur Verfügung stellen. Bedarfsweise kann aber dem Gemisch aus den Schaumstoffflocken 7 auch ein zusätzliches Absorptionsmittel für Mikrowellenstrahlung zugesetzt werden, um die notwendige Wärme durch Absorption der Mikrowellenstrahlung zu erzeugen. Der Anteil dieses zusätzlichen Absorptionsmittels kann zwischen 0,5 % und 3 %, bezogen auf die gesamte Mischung, betragen.

Des Weiteren besteht die Möglichkeit, dass insbesondere bei Druckschäumungen, dem Gemisch ein Schäumhilfsmittel, insbesondere ein Treibmittel, zugesetzt wird, um eine bestimmte Porengröße im Schaum zu erzeugen. Dieses Treibmittel kann gegebenenfalls chemisch gebunden sein und beispielsweise durch Mikrowellen freigesetzt werden.

Für den Fall, dass beabsichtigt ist, Formteile 5 mit Kaschierungen, also beispielsweise Deckschichten, z.B. aus Textilien, oder Teppichen bzw. Deckschichten aus anderen Kunststoffschichten herzustellen, besteht selbstverständlich die Möglichkeit, diese Deckschichten vor Einfüllung des Schaumstoffflockengemisches in den Formhohlraum 4 einzulegen.

Die Füllung selbst erfolgt bei geschlossenem Schäumwerkzeug, also in geschlossener Form 1.

Danach wird die Heizeinrichtung 10 aktiviert und Mikrowellenergie in den Formhohlraum 4 eingeleitet, wodurch das Bindemittel aushärtet bzw. aufschäumt und so die Zwischenräume zwischen den Schaumstoffflocken 7 mit dem Bindemittel ausgefüllt werden und über das Bindemittel die Schaumstoffflocken 7 miteinander zum fertigen Formteil 5 verbunden werden.

Es können Mikrowellen mit einer Frequenz zwischen 0,3 GHz und 300 GHz verwendet werden.

Die Ausführungsbeispiele zeigen mögliche Ausführungsvarianten der Vorrichtung zur Herstellung des Formteils 5, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus Form 1 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2; 3; 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### B e z u g s z e i c h e n a u f s t e l l u n g

- 1: Form
- 2: Teilform
- 3: Teilform
- 4: Formhohlraum
- 5: Formteil
- 6: Entlüftungsöffnung
- 7: Schaumstoffflocke
- 8: Öffnung
- 9: Rohrleitung
- 10: Heizeinrichtung
- 11: Halteeinrichtung
- 12: Ausnehmung
- 13: Einsatz

## Patentansprüche

1. Verfahren zur Herstellung eines Formteils (5) aus einem Verbundschaumstoff umfassend Schaumstoffflocken (7) und ein Bindemittel, nach dem die Schaumstoffflocken (7) mit dem Bindemittel benetzt werden und in einem Fluidstrom in einen Formhohlraum (4) einer Form (1) eingetragen werden, wobei der Formhohlraum (4) allseitig mit Formwänden versehen ist, wobei zumindest eine der Formwände zumindest eine Entlüftungsöffnung (6) für das Fluid aufweist, und danach das Bindemittel bei erhöhter Temperatur zur Reaktion gebracht wird und dadurch die Schaumstoffflocken (7) zum Formteil (5) verbunden werden, wobei der Fluidstrom zumindest während des Füllvorganges der Form (1) aufrecht erhalten wird um eine bevorzugt Ablagerung der Schaumstoffflocken (7) an einer der Formwände zu vermeiden, **dadurch gekennzeichnet, dass** zur Temperaturerhöhung Mikrowellen von außerhalb der Form (1) in diese eingestrahlt werden und für zumindest eine Formwand der Form (1) ein Werkstoff verwendet wird, der einen dielektrischen Verlustfaktor (tan δ) bei 1 MHz nach DIN 53 483 aufweist, der ausgewählt ist aus einem Bereich mit einer unteren Grenze von 0,00005 und einer oberen Grenze von 0,0008.

2. Verfahren nach Anspruch 1, **dadurch gekennzeichnet, dass** die Schaumstoffflocken (7) in der Form (1) mit dem Bindemittel vermengt werden.

3. Verfahren nach Anspruch 2, **dadurch gekennzeichnet, dass** die Form (1) in zumindest zwei Füllstufen mit Teilmengen gefüllt wird, wobei zwischen den Füllstufen das Bindemittel in die Form eingebracht wird.

4. Verfahren nach einem der Ansprüche 1 bis 3, **dadurch gekennzeichnet, dass** als Bindemittel ein Rohstoff für einen Polyurethanschaum verwendet wird.

5. Verfahren nach einem der Ansprüche 1 bis 4, **dadurch gekennzeichnet, dass** die Schaumstoffflocken (7) mit einem Überdruck in die Form (1) eingeblasen werden, der ausgewählt ist aus einem Bereich mit einer unteren Grenze von 1,5 bar und einer oberen Grenze von 10 bar.

6. Vorrichtung zur Herstellung eines Formteils (5) aus einem Verbundschaumstoff, mit einer Form (1) die einen Formhohlraum (4) aufweist, der allseitig von Formwänden umgeben ist, wobei zumindest eine der Formwände zumindest eine Entlüftungsöffnung (6) für ein Fluid aufweist, und in zumindest einer Formwand eine Öffnung (8) für das Eintragen von Schaumstoffflocken (7) in den Formhohlraum (4) ausgebildet ist, wobei die Öffnung (8) mit einer Rohrleitung (9) verbunden ist, in der die Schaumstoffflocken (7) zur Form in einem Fluidstrom förderbar sind, und mit zumindest einer Heizeinrichtung (10), **dadurch gekennzeichnet, dass** die Heizeinrichtung (10) eine Mikrowellenheizung ist, die in der Nähe von oder an einer äußeren Oberfläche von zumindest einer der Formwände angeordnet ist und zumindest diese Formwand der Form (1) aus einem Werkstoff besteht, der einen dielektrischen Verlustfaktor (tan δ) bei 1 MHz nach DIN 53 483 aufweist, der ausgewählt ist aus einem Bereich mit einer unteren Grenze von 0,00005 und einer oberen Grenze von 0,0008.

7. Vorrichtung nach Anspruch 6, **dadurch gekennzeichnet, dass** der Werkstoff für die Formwand bzw. die Formwände ausgewählt ist aus einer Gruppe umfassend Polyethylen, Ultrahochmolekulares Polyethylen, Polypropylen.

8. Vorrichtung nach Anspruch 6 oder 7, **dadurch gekennzeichnet, dass** in sämtlichen Formwänden Entlüftungsöffnungen (6) ausgebildet sind.

9. Vorrichtung nach einem der Ansprüche 6 bis 8, **dadurch gekennzeichnet, dass** die Entlüftungsöffnung(en) (6) eine lichte Weite aufweisen, die ausgewählt ist aus einem Bereich mit einer unteren Grenze von 0,5 mm und einer oberen Grenze von 25 mm.

10. Vorrichtung nach einem der Ansprüche 6 bis 9, **dadurch gekennzeichnet, dass** Entlüftungsöffnungen (6) mit einer unterschiedlichen lichten Weite angeordnet sind.

11. Vorrichtung nach Anspruch 10, **dadurch gekennzeichnet, dass** in der der Öffnung (8) für den Eintrag der Schaumstoffflocken (7) gegenüber liegenden Formwand (eine) Entlüftungsöffnung(en) (6) mit einer im Vergleich zu den Entlüftungsöffnungen (6) der anderen Formwände kleineren lichten Weite angeordnet ist/sind.

12. Vorrichtung nach einem der Ansprüche 6 bis 11, **dadurch gekennzeichnet, dass** die Entlüftungsöffnungen (6) in einem Abstand zueinander angeordnet sind, der ausgewählt ist aus einem Bereich mit einer unteren Grenze von 10 mm und einer oberen Grenze von 100 mm.

13. Vorrichtung nach einem der Ansprüche 6 bis 12, **dadurch gekennzeichnet, dass** die Form (1) in einer Halteeinrichtung (11) angeordnet ist.

14. Vorrichtung nach einem der Ansprüche 6 bis 13, **dadurch gekennzeichnet, dass** in zumindest einer der Formwände eine Ausnehmung (12) angeordnet ist, in der ein Einsatz (13) gehaltert ist, in dem die Entlüftungsöffnungen (6) ausgebildet sind.

15. Vorrichtung nach einem der Ansprüche 6 bis 14, **dadurch gekennzeichnet, dass** in mehreren Formwänden Öffnungen (8) für das Eintragen der Schaumstoffflocken (7) angeordnet sind.
